(19) Europäisches Patentamt

European Patent Office

Office européen des brevets

(11) **EP 1 229 497 B1**

(12) **EUROPEAN PATENT SPECIFICATION**

(45) Date of publication and mention
of the grant of the patent:
**13.04.2005 Bulletin 2005/15**

(51) Int Cl.⁷: $G06T\ 9/20$, $G06T\ 5/00$

(21) Application number: **02250445.0**

(22) Date of filing: **22.01.2002**

(54) **Run length based connected components and contour following for enhancing the performance of circled region extraction algorithm**

Lauflängenbasierte verbundene Komponenten und Konturverfolgung zur Laufzeitverbesserung eines Extraktionsalgorithmus für kreisförmigen Bereich

Composants connectés et suivis de contour basés sur longueur de passage pour améliorer la performance d'un algorithme pour extraire des régions circulaires

(84) Designated Contracting States:
**DE FR GB**

(30) Priority: **31.01.2001 US 773214**

(43) Date of publication of application:
**07.08.2002 Bulletin 2002/32**

(73) Proprietor: **MATSUSHITA ELECTRIC INDUSTRIAL CO., LTD.**
**Kadoma-shi, Osaka 571-8501 (JP)**

(72) Inventor: **Guo, Jinhong K.**
**West Windsor, New Jersey 08550 (US)**

(74) Representative:
**Burrington, Alan Graham Headford et al**
**Atkinson Burrington**
**25-29 President Buildings**
**President Way**
**Sheffield S4 7UR (GB)**

(56) References cited:
**EP-A- 0 627 694        US-A- 5 228 097**

• **STRATHY N W ET AL: "A sequential method of extracting contour chains from an image" PATTERN RECOGNITION, 1994. VOL. 2 - CONFERENCE B: COMPUTER VISION & IMAGE PROCESSING., PROCEEDINGS OF THE 12TH IAPR INTERNATIONAL. CONFERENCE ON JERUSALEM, ISRAEL 9-13 OCT. 1994, LOS ALAMITOS, CA, USA,IEEE COMPUT. SOC, 9 October 1994 (1994-10-09), pages 580-582, XP010216230 ISBN: 0-8186-6270-0**
• **DUDA R O ET AL: "CONTOUR FOLLOWING" PATTERN CLASSIFICATION AND SCENE ANALYSIS, NEW YORK, J.WILLEY & SONS, US, 1973, pages 290-293, XP000615688**

**Description**

BACKGROUND AND SUMMARY OF THE INVENTION

The present invention relates generally to image processing. More particularly, the invention relates to a method and system for identifying contours within pixel-based image data. The identified contours may be used, for example, to identify circled regions on a scanned document, allowing the image processing system to extract content within the circled region to index the document or perform other processing tasks based on the information.

There is considerable interest today in intelligent, automated document imaging systems that can store and retrieve scanned documents and other pixel-based image data with minimal document coding by the user. In a conventional document imaging system the scanned image is displayed on the computer screen, and the user may highlight a portion of the scanned image from which indexing information may be extracted. For example, the user could highlight the caption of a scanned newspaper article, and the caption is processed through Optical Character Recognition (OCR) and then used as an index or label for that scanned image. The index or label is used to later retrieve the scanned newspaper clipping.

While the use of the computer display to highlight relevant portions of a document works well in some applications, there are other applications where physical interaction with the computer screen is not convenient. In such instances, it may be more convenient for the user to simply encircle the region of interest on the hard copy document prior to scanning it into the system. In other words, the user would use a pencil or pen to draw a circle around the region of interest, and the image processing system would then identify the user's hand-drawn circle, extract and process the text within the circled region, and use it for indexing or document processing purposes.

Identifying a circled region within the pixel-based image data of a scanned document is a fairly challenging problem. Traditional algorithms for identifying circled regions attempt to identify connected components that have a profile of attributes indicating that they might constitute a circled region. Traditionally, a connected component comprises a collection of black, contiguously adjoining pixels. Depending on the algorithm used, adjoining pixels are those that lie in the immediate neighborhood surrounding a given pixel, typically either the four pixels arranged like points on a compass, or the eight pixels including those four plus diagonals. When a conventional connected component analysis is performed, the scanned image may contain a number of connected component candidates which could represent a user-drawn circle. Post processing algorithms are performed on the connected component data to rule out those that are too small, and thus more likely to correspond to individual letters or noise data. Post processing algorithms also examine the connected component data to determine if there is closure within a given connected component. In this way, closed circles are identified and other markings such as marginal lines or underlining are eliminated.

Strathy et al.: 'A sequential method of extracting contour chains from an image', Proceedings of the 12th IAPR, pages 580-582 describes contour chain extraction whereby an image is scanned row by row from left to right and top to bottom. Eight-connected pixels in succeeding lines are merged and determine the final contour.

Duda et al.: "Contour following" Pattern Classification and Scene Analysis, New York, J.Wiley & Sons, US, 1973, pages 290-293 discloses contour following using a simple rule-driven approach in which an imaginary observer marches along the contour and turns left or right depending on his position (i.e. inside or outside of the object whose contour is to be determined).

US-A-5 228 097 describes generating an image representations by scanning an image line by line and coding chains of successive pixels with similar density thereby determining object and background region in an image.

While conventional connected component analysis does a reasonably good job of identifying potential circled region candidates, the process is fairly computationally expensive. The present invention addresses this issue through a far more efficient algorithm. Instead of seeking connected components in the conventional fashion--a process that will potentially generate many candidates that each must be analyzed--the present algorithm uses a single data structure that is populated with run length information as the image is being scanned. As will be more fully explained herein, the data structure maintains parent, child and sibling relationship information about each "run" of contiguous pixels within a given scanned row. The parent, child and sibling information is then traversed to identify contours that represent closed circles of suitable size. The run length algorithm thus eliminates the need to painstakingly explore each pixel to its neighboring pixels in the conventional connected component fashion. Moreover, although the algorithm is well suited for identifying circled regions, in its more general case, the algorithm can be used to identify a variety of different contours that meet a set of predefined criteria. Also, while the present "black-and-white" embodiment seeks to identify runs of contiguous black pixels, the algorithm can readily be extended to accommodate gray scale and color pixel image data as well. In such applications, the system merely needs to identify which pixel states or pixel values (e. g., shades or colors) may constitute a member of a run, and the algorithm will identify contours made up of pixels having any of the identified states or values.

According to one aspect of the invention, the method for identifying contours within pixel-based image data comprises expressing the image data as a grid of columns and rows. A scan order is then established over the grid to define parent-child relationships between contiguous pixels in adjacent rows and sibling relationships among non-contiguous pixels in the same row. A run data structure is established in the computer-readable memory that defines a run member by its row position and by its starting and ending column positions. The run data structure further defines parent, child and sibling structures for storing information about these relationships.

As the image data is scanned according to the scan order established above, the processor identifies contiguous pixels of a predetermined state as identified run members. It also determines the parent-child and sibling relationships of the identified run members. This information is populated into the run data structure with the row position and starting and ending column positions of the identified run member and with the parent-child and sibling relationships of the identified run member. The populated data structure is then traversed by following the parent-child and sibling relationships to identify contours within the pixel-based image data. If desired, once the contours have been identified, additional processing can be performed to improve the likelihood that the identified contour represents a user-drawn circle. The additional processing aids in discriminating one user-drawn circle from another, when two circles overlap. The additional processing involves computing feature points along the contour and then breaking the contour into segments at the feature points. The broken contours are then used to generate reconstructed circles, each having its own identity and thus each being separate from other circles which it may overlap.

For a more complete understanding of the invention, its objects and advantages, refer to the following specification and to the accompanying drawings.

BRIEF DESCRIPTION OF THE DRAWINGS

Figure 1 is a pixel diagram illustrating the concepts of run length, parent-child relationships and sibling relationships;
Figure 2 is a data structure diagram illustrating a presently preferred data structure for implementing the invention;
Figure 3 is a flowchart diagram illustrating a presently preferred algorithm for populating the data structure of Figure 2;
Figure 4 is a pixel diagram illustrating an example of a contour, useful in understanding how the data structure of Figure 2 is populated by applying the algorithm of Figure 3;
Figure 5 is a flowchart diagram illustrating how the data structure is traversed to identify a contour;

Figure 6 is a pixel diagram illustrating the contour following process of Figure 5 as applied to the exemplary data of Figure 4;
Figure 7 is a pixel diagram illustrating the run length midpoints with darker shading;
Figure 8 is a pixel diagram, similar to Figure 6, but showing the two main contours with different line styles to illustrate how the contours are joined; and
Figure 9 is a flowchart diagram of an enhanced circled region extraction algorithm suitable for discriminating among overlapping circles.

DESCRIPTION OF THE PREFERRED EMBODIMENT

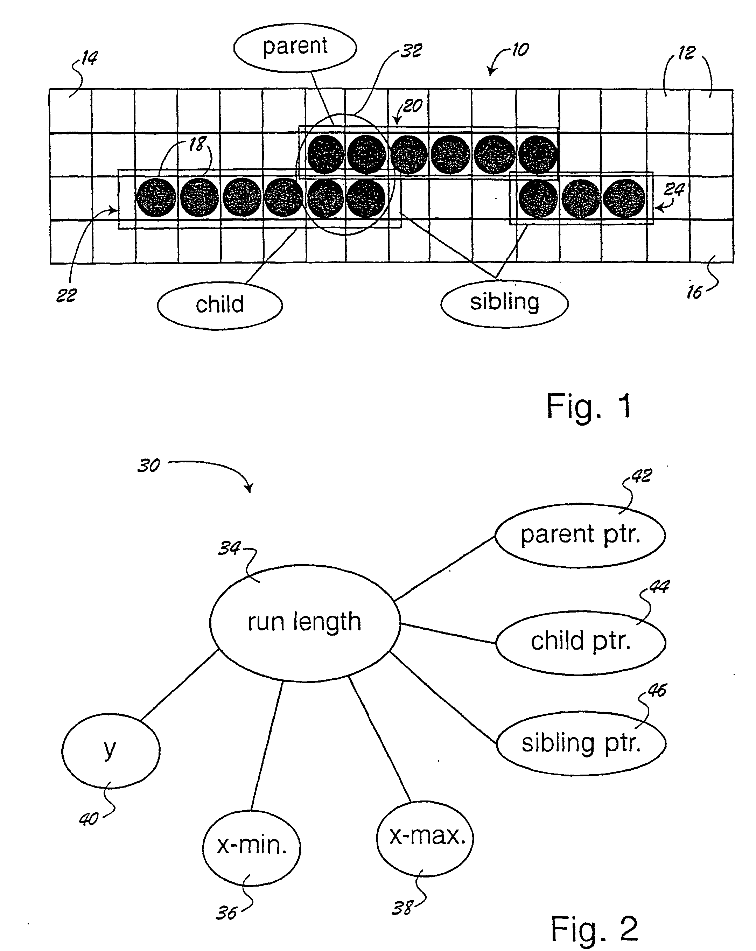

The run length based method of the preferred embodiment scans image data in a pre-established scan order to identify parent, child and sibling structures within the image data. In this regard, the image data may be expressed as a rectangular grid **10** of columns and rows comprising individual pixels that are represented in Figure 1 as squares **12.** In the general case, each pixel may contain a data value representing a particular state, tone or color of which the overall image is made. In black-and-white images, each pixel contains binary data indicating whether that pixel is black or white. In a gray scale image, each pixel may contain a byte or word of data indicating what gray scale tone the pixel represents. In a color image the pixel may contain data indicating the color and intensity of the pixel. The present invention works with all forms of image data, regardless of whether the image is black and white, gray scale or color.

As will be more fully explained below, the processing algorithm scans the grid of pixel data in a predetermined scan order. For illustration purposes, it will be assumed that the scan order is from top to bottom and from left to right. Thus the grid **10** would be scanned beginning at pixel **14** in the upper left-hand corner and ending with pixel **16** in the lower right-hand corner.

The algorithm is designed to identify and correlate groups of adjacent pixels that define a linear string termed a *run* or *run length*. The scanning process groups pixels of a predetermined state together to form run lengths within the image.

In Figure 1 a black-and-white image is illustrated. White pixels appear as white rectangles, such as pixels **12.** Black pixels appear as black dots within the pixel square, such as pixels **18.** In the normal case, the system is designed to form run lengths from contiguous opaque pixels, such as the black pixels in Figure 1. However, in the more general case, the system can be used to form run lengths of pixels occupying a variety of different states. For example, if gray scale images are provided, the system could be configured to consider all pixels darker than a predetermined gray scale level to be considered in forming run lengths. In a color image, colors of predetermined intensities or tonal hues may be selected for potential membership in a run length.

The preferred embodiment considers run lengths to be defined by a collection of contiguous pixels of a predetermined state (e.g., the black pixel state in a black-and-white image). Three such run lengths are illustrated in Figure 1 at **20, 22** and **24.** In Figure 1 bounding box rectangles have been shown around each of these run lengths to make them more visible. Each run length may be represented by its x and y coordinates, that is its row and column coordinates within grid **10.** Because the scan order is performed on a row by row basis, each run length can be identified by its beginning and ending column positions and its row position. These three coordinate positions that uniquely identify a run length are stored as the x-minimum **36,** x-maximum **38** and y-coordinate **40** data values within the run data structure **30** shown in Figure 2. Specifically, the run data structure **30** comprises a linked list that includes data values for storing the x-minimum, x-maximum and y-coordinate values for each run length identified during the scanning process.

Individual pixels (such as the black pixels in Figure 1) are identified as a run length if they occupy contiguous pixel locations within a given row. To accommodate slight imperfections and data dropout in the image, the algorithm can be configured to ignore single pixels (or more) of the incorrect state within a potential run length. This may be done through preprocessing or on the fly as the scanning algorithm performs its other tasks. In effect, if a single white pixel is encountered in what would otherwise be a complete run length, the algorithm can treat that pixel as if it were a black pixel, thereby assigning it to the run length, provided the white pixel is neighbored on both sides by black pixels.

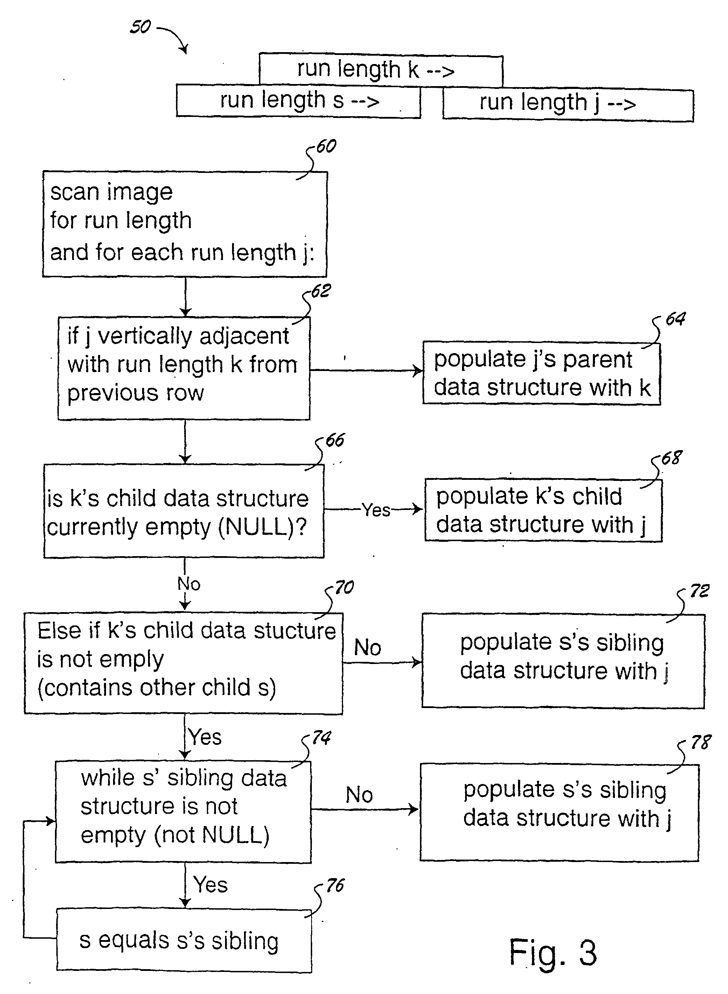

The scanning algorithm and the associated data structure of Figure 2 defines a hierarchy among run lengths. The hierarchy is termed a parent-child-sibling hierarchy. The concept is illustrated in Figure 1. A parent-child relationship exists where two run lengths have one or more adjacent black pixels (or pixels of whatever predetermined state defines a run length) in a given column. In Figure 1, run lengths **20** and **22** have two pairs of vertically adjacent pixels (shown circled and identified by reference numeral **32**) that qualify these run lengths for the parent-child relationship. Specifically, run length **20** is deemed the parent and run length **22** is deemed the child, because run length **20** is scanned before run length **22.** The existence of this parent-child relationship is discovered automatically as the scanning algorithm performs its tasks, and the relationship is recorded in the run data structure **30.** The details of how this is accomplished will be discussed below in connection with the flowchart of Figure 3.

The scanning algorithm and its associated data structure **30** also defines a sibling relationship between two run lengths that lie on the same row and share the same parent, such as run lengths **22** and **24.** The scanning algorithm automatically detects sibling relationships and stores them in data structure **30,** as will be more fully described in connection with Figure 3.

The presently preferred run data structure **30** defines each run length **34** by its associated x-minimum value **36,** x-maximum value **38** and y-coordinate value **40.** The run length data structure also has associated with it a parent pointer **42,** a child pointer **44** and a sibling pointer **46.** The parent, child and sibling pointers **42-46** establish a linked list of the run length data structures. The scanning algorithm populates this data structure as it visits each pixel in grid **10.** In the preferred embodiment a single, multiply linked list is populated with individual run length data structures **34** corresponding to each run length identified by the scanning algorithm.

Run Length Scanning Algorithm

Figure 3 shows the presently preferred run length scanning algorithm. For purposes of understanding the algorithm it will be assumed that scanning has proceeded to the point where a run length 'k' has been identified and the algorithm is currently processing a run length 'j' that has a sibling run length 's'. The relationship of scan lengths k, j and s are shown diagrammatically at **50** for convenience.

The scanning algorithm begins at step **60** by scanning the image in the predetermined scan order, searching for occurrences of run lengths. As discussed above, run lengths are identified as contiguous pixels in a common row that have the same pixel state (e.g. contiguous black pixels). The preferred scanning algorithm is recursive. For each run length identified (such as run length 'j') the following process is performed.

If, as illustrated at step **62,** the identified run length (j) is vertically adjacent to a run length (k) from a previous row, then the current run length's parent data structure (j's parent data structure) is populated with a reference to the vertically adjacent run length (k), as shown at **64.** The algorithm then tests k's child data structure at step **66** to determine if it is currently empty (containing a null value). If a null value is found, the algorithm populates k's child data structure with a reference to scan length j, as illustrated at **68.** If k's child data structure is not currently empty (in other words if it contains a reference to another child (s)), and if the other child (s) does not already have a sibling, the algorithm detects this at step **70** and then populates s's sibling data structure with j, as shown at **72.** Thus steps **66-72** essentially test whether the child of k is null. If so, it sets j to the child of k. Otherwise it sets j as the sibling of the child of k (s) in the case where s has no other siblings.

In some instances the algorithm will detect that the child (s) already has a sibling. In this case the algorithm checks whether s's sibling has a sibling, and so on.[sets the child as the sibling's sibling, and so on. This is shown in steps **74** and **76.** When a null reference is finally reached, the null reference is replaced with a reference to j as shown at step 78.

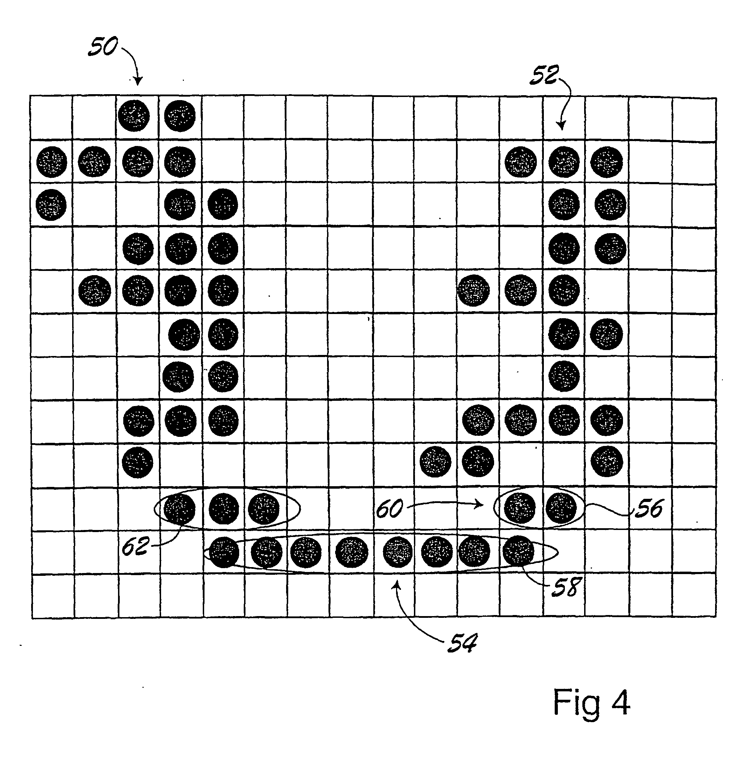

The scanning algorithm illustrated in Figure 3 populates the run data structure for later retrieval of connected components. The connected component retrieval process operates by tracing from parent to child and from sibling to sibling. Figure 4 provides an example of an image of a generally u-shaped contour made up of a plurality of individual run lengths. The objective of the connected component retrieval process is to identify this u-shaped contour by tracing the parent-to-child and sibling-to-sibling relationships of the run lengths involved.

Note that the u-shaped contour in Figure 4 has a left side leg **50** comprised of parent-child relationships when scanned from left to right and from top to bottom. The right side leg **52** is also comprised of parent-child relationships. The left and right side legs are joined by the bottom leg **54.** Because the scan order is from left to right and from top to bottom, the point at which bottom leg **54** joins right side leg **52** involves a sibling relationship. Specifically, run length **56** and run length **58** overlap at **60.** Run length **56** is thus treated as the sibling of the parent **62** of run length **58**.

Connected Component Retrieval

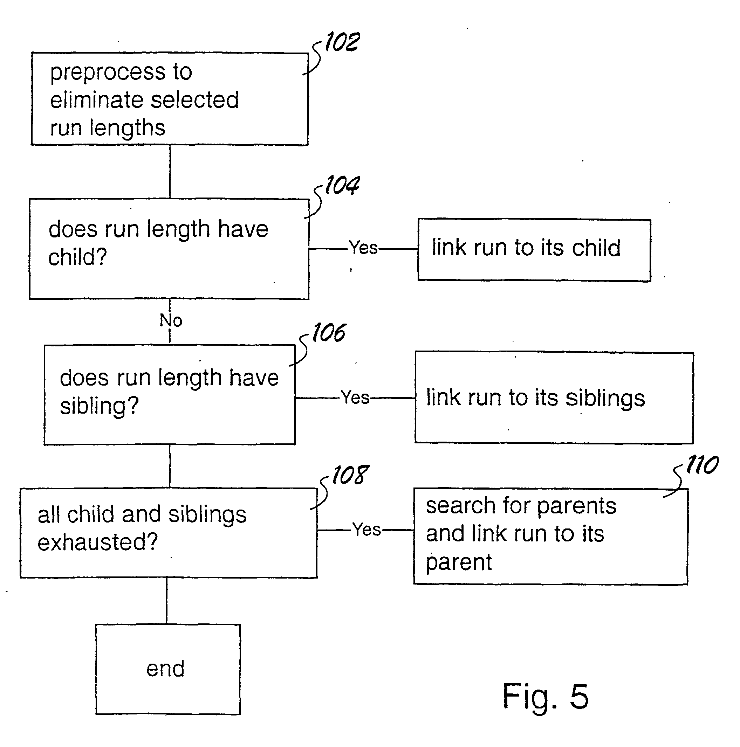

Once the run data structure **30** has been populated by the scanning process, a connected component retrieval process is commenced. Referring to the flowchart of Figure 5, the retrieval process makes use of the parent, child and sibling information obtained and stored during initial scanning. This initial screening step is depicted at step **102**.

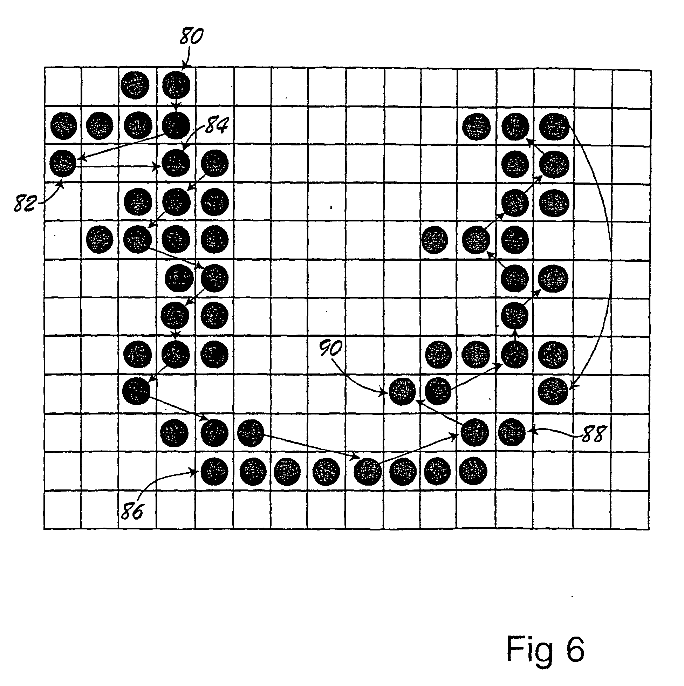

The connected components that remain are processed as follows. Beginning with the run length occupying the upper left-most corner (determined by its x-minimum, x-maximum and y-coordinate values), the process first identifies, by examining the run data structure, if that run length has a child. This is depicted at step **104** and also illustrated in the connected component retrieval diagram of Figure 6. In Figure 6 the starting point is indicated at **80.** If no child is found, such as in the case of the run length at **82** in Figure 6, the procedure links to the sibling, as indicated at **84.** The sibling linking step is depicted at **106** in Figure 5.

The procedure is recursive. It continues to seek child and sibling connections until no more children or siblings are identified, as indicated at step **108.** This condition occurs at **86** in Figure 6. Once no further children or siblings can be found, the procedure begins looking for parents of a given run length as depicted at step **110.** For example, referring to Figure 5, the procedure would link run link **88** with its parent **90.** Eventually, the entire connected component is retrieved, resulting in a linked structure identifying which run lengths are connected to which other run lengths. The entire linked structure thus represents one connected component. Note that it is possible for a given image to have several connected components that are detached from one another. The procedure described in Figure 5 may be repeated multiple times until all connected components have been identified.

While the procedure described so far is well adapted at identifying connected components found in pixel-based images, some image processing tasks, such as identifying circled regions, benefit by further processing. Specifically, the presently preferred embodiment converts the connected component into a contour, which may then be used to generate new structures that are more easily and reliably processed. In an application where user-drawn circles are identified so that the encircled region can be extracted, the connected components are converted into contours that are then used to re-generate circles that are more easily processed by the computer.

The contour following algorithm uses the same data structure that generated the connected components, namely the run data structure **30**. When retrieving connected components, the algorithm recursively retrieves the child or parent of each run length. If no child or parent can be found, the algorithm switches to siblings. For each sibling, the algorithm continues to search for children and parents first. The parent and child relationship ensures that the related run lengths retrieved have pixels that belong to the same contour and are next to each other in a section of the contour.

In the presently preferred embodiment the contour following algorithm defines the mid-point of each run length. The mid-point P is thus defined by its $P_X$ and $P_Y$ components as follows:

$$P_x = \frac{x_{min} + x_{max}}{2}$$

$$P_y = y_{coordinate}$$

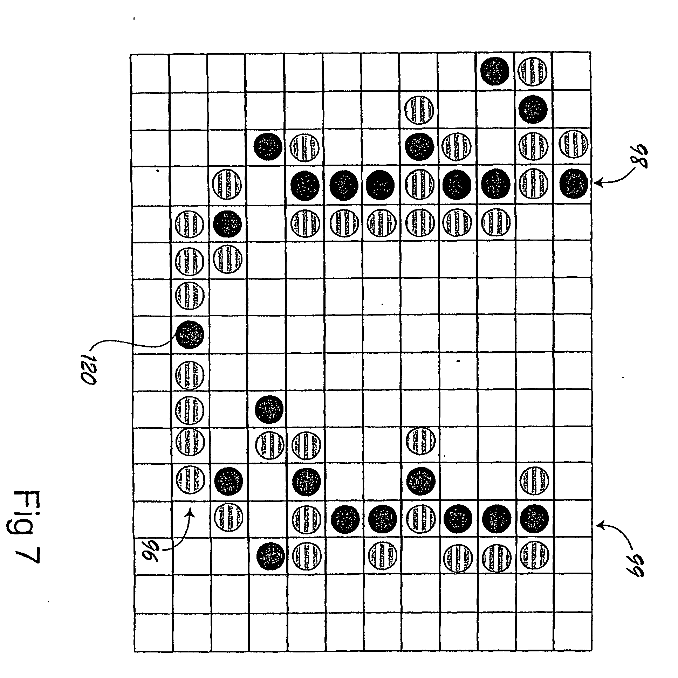

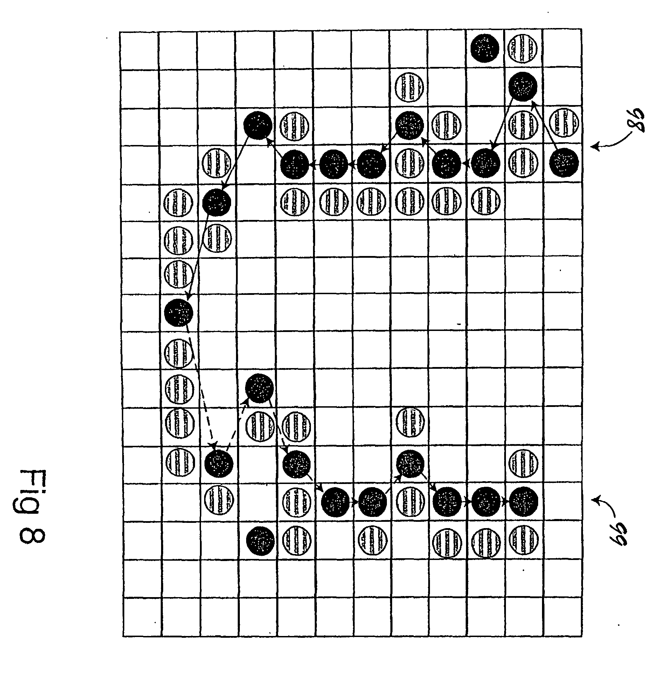

Figure 7 shows the mid-points of an example run length graph, where the mid-points are marked as dark points and the remaining pixels are marked in lighter cross hatched shading. Note that every time the retrieval switches to one of the siblings, the algorithm starts another contour segment. Thus in Figure 7, there are two contour segments, a left-most contour segment **98** and a rightmost contour segment **99.** The two segments are joined along the horizontal run length **96.** Thus they share one mid-point in common, that being mid-point **120.** The contour following algorithm assigns the mid-point at the end of a contour to be the beginning mid-point of the subsequent contour. In this way, both contours are linked together, as illustrated in Figure 8. In Figure 8 the contour **98** is shown linked together using solid lines and the contour **99** is shown linked with dotted lines.

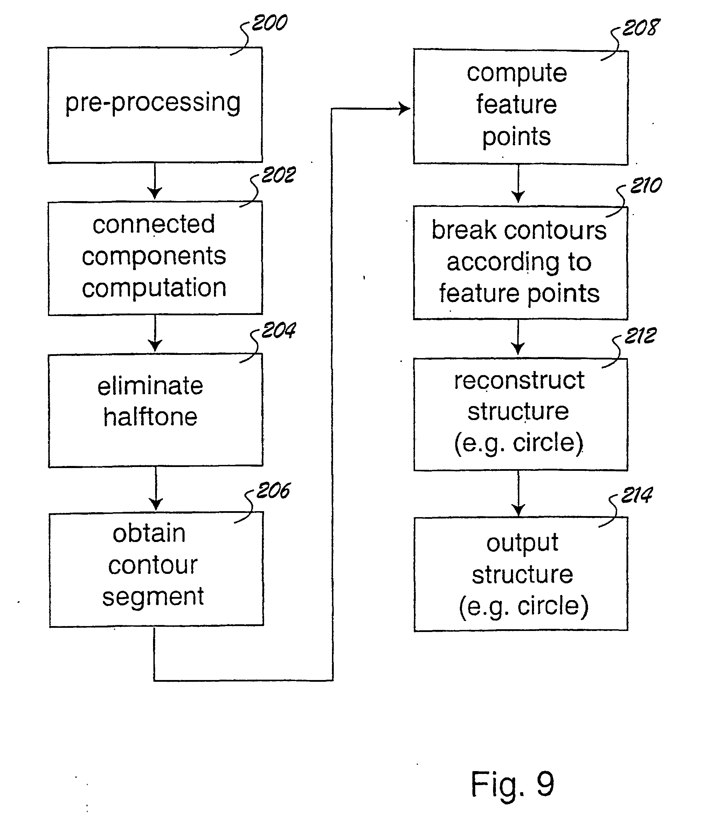

To more fully understand how the run length based connected component analysis may be used in an application, refer to the flow diagram of Figure 9. Figure 9 illustrates how a user-drawn circle may be identified in a scanned image. The user-drawn circle may, for example, encircle a file designation label or number used to index the scanned image for storage and retrieval.

Beginning at step **200,** the procedure first pre-processes the image to convert the image data into suitable resolution and bit-depth for connected component analysis. This is an optional step that may be performed, for example, to convert color image data into black-and-white data or to convert gray scale data into black-and-white data.

The procedure next proceeds to step **202** where connected component analysis is performed using the run length analysis techniques described above. If desired, at step **204,** half-tone data may be eliminated and small gaps in pixel data (attributable to noise) may be eliminated. Individual white pixels in an otherwise black pixel domain may be converted to black pixels to "fill in" or despeckle the image data.

After the connected components have been identified and the run data structure populated, the process advances to step **206,** where contour segment information is extracted from the data. The contour segment extraction process is performed as described above, resulting in one or more connected contours, such as the connected contour shown in Figure 8. The connected contour serves as a "replacement" for the originally drawn circle. Feature points are identified in the contour, step **208,** and these feature points are used to break the contour into contour segments, step **210.** Breaking the contour according to its feature points is useful in situations where user-drawn circles may contact or overlap other contour structures. The feature points are then used at step **212** to reconstruct circles, which are then output at step **214.** The reconstructed circles are generated without gaps or ambiguity regarding closure. Thus the subsequent image processing can be performed more efficiently.

## Claims

1. A method for identifying contours within pixel-based image data, comprising:

   expressing said image data as a grid of columns and rows;

   **characterized by**:

   establishing a scan order over said grid to define a parent-child relationship between contiguous pixels in adjacent rows and to define a sibling relationship among non-contiguous pixels in the same row;
   establishing a run data structure in computer-readable memory that defines a run member by its row position and by its starting and ending column positions;
   said run data structure further defining parent, child and sibling structures for storing information about the parent-child relationships and sibling relationships of pixels associated with said run member;
   scanning said image data according to said scan order to identify contiguous pixels of a predetermined state as identified run members;
   determining the parent-child and sibling relationships of said identified run members;
   populating said run data structure with the row position and starting and ending column positions of said identified run member and with the parent-child and sibling relationships of said identified run member;
   using said populated run data structure to traverse the parent-child and sibling relationships and thereby identify contours within said pixel-based image data.

2. The method of Claim 1 further including the steps of:

   generating reconstructed circles based on broken contours, the reconstructed circles uniquely identified and separate from any other circles which overlap the reconstructed circle.

3. The method of Claim 1 wherein the predetermined state is a tone, a color and combinations thereof.

4. The method of Claim 1 wherein the parent-child and sibling relationships are pointers which establish a linked list of the run member data structures.

5. The method of Claim 1 further includes the steps of:

   identifying the first run member occupying a row position and starting and ending column positions;
   determining all parent-child and sibling relationships of pixels associated with the first run member;
   identifying additional run members based on the parent-child and sibling relationships; and

   wherein a connected component is retrieved based on identifying links from the parent-child relationships.

## Patentansprüche

1. Verfahren zum Identifizieren von Konturen innerhalb bildpunktbasierter Bilddaten, mit:

   Ausdrücken der Bilddaten als Gitter aus Spalten und Zeilen,

**gekennzeichnet durch**:

Festlegen einer Abtastreihenfolge über das Gitter, um eine Eltern-Kind-Beziehung zwischen aufeinander folgenden Bildpunkten in benachbarten Zeilen zu definieren, und um eine Geschwisterbeziehung zwischen nicht aufeinander folgenden Bildpunkten in derselben Zeile zu definieren;

Festlegen einer Laufdatenstruktur in einem computerlesbaren Speicher, die ein Laufelement anhand seiner Position in der Zeile und anhand seiner Anfangs- und Endpositionen in der Spalte definiert;

wobei die Laufdatenstruktur ferner Eltern-, Kind- und Geschwisterstrukturen zum Speichern von Informationen über die Eltern-kind-Beziehungen und Geschwisterbeziehungen von zu diesem Laufelemente gehörigen Bildpunkten definiert;

Abtasten der Bilddaten gemäß der Abtastreihenfolge, um aufeinander folgende Bildpunkte eines vorgegebenen Zustands als identifizierte Laufelemente zu identifizieren;

Bestimmen der Eltern-Kind- und Geschwisterbeziehungen der identifizierten Laufelemente; Bestücken der Laufdatenstruktur mit der Zeilenposition und den Anfangs- und Endpositionen in der Spalte des identifizierten Laufelements und mit den Eltern-Kind- und Geschwisterbeziehungen des identifizierten Laufelements;

Verwenden der bestückten Laufdatenstruktur, um die Eltern-Kind- und Geschwisterbeziehungen zu durchlaufen und **dadurch** Konturen innerhalb der bildpunktbasierten Bilddaten zu identifizieren.

**2.** Verfahren nach Anspruch 1, ferner die Schritte enthaltend:

Erzeugen rekonstruierter Kreise auf der Basis gebrochener Konturen, wobei die rekonstruierten Kreise eindeutig identifiziert werden und von allen änderen Kreisen getrennt sind, die die rekonstruierten Kreise überlappen.

**3.** Verfahren nach Anspruch 1, bei dem der vorgegebene Zustand ein Farbton, eine Farbe und Kombinationen derselben ist.

**4.** Verfahren nach Anspruch 1, bei dem die Eltern-Kind- und Geschwisterbeziehungen Zeiger sind, die eine verbundene Liste von Laufelement-Datenstrukturen festlegen.

**5.** Verfahren nach Anspruch 1, ferner die Schritte enthaltend:

Identifizieren des ersten Laufelements, das eine Zeilenposition und Anfangs- und Endpositionen in der Spalte belegt;

Bestimmen aller Eltern-Kind- und Geschwisterbeziehungen von zum ersten Laufelement gehörigen Bildpunkten;

Identifizieren zusätzlicher Laufelemente auf Basis der Eltern-Kind- und Geschwisterbeziehungen; und

bei dem eine angeschlossene Komponente auf Basis der identifizierenden Verbindungen aus der Eltern-Kind-Beziehung abgerufen wird.

## Revendications

**1.** Procédé pour identifier des contours à l'intérieur de données d'image à base de pixels, comportant les étapes qui consistent :

à exprimer les données d'image sous la forme d'une grille de colonnes et de rangées ; **caractérisé par** les étapes qui consistent :

à établir un ordre de balayage sur la grille pour définir une relation parents-enfants entre des pixels contigus dans des rangées voisines et pour définir une relation collatérale parmi des pixels non contigus dans la même rangée ;

à établir une structure de données en cours dans une mémoire pouvant être relue par ordinateur qui définit un élément en cours par sa position de rangée et par ses positions de colonnes de départ et de fin ;

la structure de données en cours définissant en outre des structures parents-enfants et collatérales pour mémoriser des informations concernant les relations parents-enfants et des relations collatérales de pixels associés à l'élément en cours ;

à balayer les données d'image suivant l'ordre de balayage pour identifier des pixels contigus d'un état déterminé à l'avance en tant qu'élément en cours identifié ;

à déterminer les relations parents-enfants et collatérales des éléments en cours identifiés ;

à peupler la structure de données en cours avec la position de rangée et des positions de colonnes de départ et de fin de l'élément en cours identifié et avec les relations parents-enfants et collatérales de l'élément en cours identifié ;

à utiliser la structure de données en cours peuplée pour traverser les relations parents-enfants et collatérales et ainsi identifier des contours à l'intérieur des données d'image à base de pixels.

**2.** Procédé suivant la revendication 1, comportant en outre les étapes qui consistent :

> à produire des cercles reconstruits sur la base de contours brisés, les cercles reconstruits étant identifiés de manière unique et distincte de n'importe quel autre cercle qui chevauche le cercle reconstruit.

**3.** Procédé suivant la revendication 1, dans lequel l'état déterminé à l'avance est une tonalité, une couleur et une combinaison de ceux-ci.

**4.** Procédé suivant la revendication 1, dans lequel les relations parents-enfants et collatérales sont des pointeurs qui établissent une liste liée des structures de données d'éléments en cours.

**5.** Procédé suivant la revendication 1, comportant en outre les étapes qui consistent :

> à identifier le premier élément en cours occupant une position de rangée et des positions de colonnes de départ et de fin ;
> à déterminer toutes les relations parents-enfants et collatérales de pixels associés au premier élément en cours ;
> à identifier des éléments en cours supplémentaires sur la base des relations parents-enfants et collatérales ; et
> dans lequel un composant lié est extrait sur la base de liaisons d'identification à partir des relations parents-enfants.

Fig. 1

Fig. 2

*50*

| run length k --> |
| run length s --> | run length j --> |

*60*

```
scan image
for run length
and for each run length j:
```

*62*

```
if j vertically adjacent
with run length k from
previous row
```

*64*

```
populate j's parent
data structure with k
```

*66*

```
is k's child data structure
currently empty (NULL)?
```
—Yes→

*68*

```
populate k's child
data structure with j
```

No

*70*

```
Else if k's child data stucture
is not emply
(contains other child s)
```
No→

*72*

```
populate s's sibling
data structure with j
```

Yes

*74*

```
while s' sibling data
structure is not
empty (not NULL)
```
No→

*78*

```
populate s's sibling
data structure with j
```

Yes

*76*

```
s equals s's sibling
```

# Fig. 3

Fig 4

preprocess to
eliminate selected
run lengths — 102

does run length have
child? — 104 —Yes— link run to its child

No

does run length have
sibling? — 106 —Yes— link run to its siblings

all child and siblings
exhausted? — 108 —Yes— search for parents
and link run to its
parent — 110

end

Fig. 5

Fig 6

Fig 7

Fig 8

```
      ⌐200                                  ⌐208
┌─────────────────┐              ┌─────────────────┐
│                 │              │    compute      │
│  pre-processing │   ───────→   │    feature      │
│                 │              │    points       │
└─────────────────┘              └─────────────────┘
         │                                │
         ↓   ⌐202                         ↓   ⌐210
┌─────────────────┐              ┌─────────────────┐
│    connected    │              │ break contours  │
│   components    │              │ according to    │
│   computation   │              │ feature points  │
└─────────────────┘              └─────────────────┘
         │                                │
         ↓   ⌐204                         ↓   ⌐212
┌─────────────────┐              ┌─────────────────┐
│    eliminate    │              │   reconstruct   │
│    halftone     │              │    structure    │
│                 │              │  (e.g. circle)  │
└─────────────────┘              └─────────────────┘
         │                                │
         ↓   ⌐206                         ↓   ⌐214
┌─────────────────┐              ┌─────────────────┐
│     obtain      │              │     output      │
│    contour      │              │    structure    │
│    segment      │              │  (e.g. circle)  │
└─────────────────┘              └─────────────────┘
```

Fig. 9